# EUROPÄISCHE PATENTSCHRIFT

(11) **EP 2 809 967 B1**
(45) Veröffentlichungstag und Bekanntmachung des Hinweises auf die Patenterteilung: **30.03.2016**
(21) Anmeldenummer: 13700219.2
(22) Anmeldetag: 11.01.2013
(51) Int. Cl.: F16D 57/04

(54) **HYDRODYNAMISCHER RETARDER**
HYDRODYNAMIC RETARDER
RETARDATEUR HYDRODYNAMIQUE

(30) Priorität: 03.02.2012 DE 102012002039
(43) Veröffentlichungstag der Anmeldung: 10.12.2014
(73) Patentinhaber: Voith Patent GmbH, 89522 Heidenheim (DE)
(72) Erfinder: LAUKEMANN, Dieter, 74564 Crailsheim (DE); MARTIN, Alexander, 74594 Kressberg (DE)
(86) Internationale Anmeldenummer: PCT/EP2013/050469
(87) Internationale Veröffentlichungsnummer: WO 2013/113538

(56) Entgegenhaltungen:
- EP-A2- 1 777 134
- DE-A1- 4 442 219
- US-A- 3 482 659
- US-A- 3 613 710
- US-A1- 2004 238 301

## Beschreibung

Die vorliegende Erfindung betrifft einen hydrodynamischen Retarder, wie z.B. aus EP-A-1 777 134 bekannt, im Einzelnen gemäß dem Oberbegriff von Anspruch 1.

Hydrodynamische Retarder weisen einen mit einem Arbeitsmedium befüllbaren und davon entleerbaren Arbeitsraum auf, um Drehmoment von einem beschaufelten Primärrad, auch Rotor genannt, auf ein Sekundärrad, auch Stator genannt, zu übertragen. Bei befülltem Arbeitsraum wird das Primärrad und damit eine insbesondere mit dem Primärrad drehfest ausgeführte Welle, beispielsweise eine indirekt mit den Rädern eines Fahrzeugs verbundene Gelenkwelle oder Getriebeabtriebswelle, verzögert.

Zur Einstellung eines bestimmten Füllungsgrades im Arbeitsraum des hydrodynamischen Retarders und damit zur Einstellung eines Bremsmomentes wird ein Überlagerungsdruck auf das Arbeitsmedium, insbesondere Öl, welches in einem Arbeitsmedium bevorratet ist, aufgebracht.

Da in der Regel das Steuerdruckmedium, beispielsweise Luft, direkt auf den Flüssigkeitsspiegel Druck ausübt, kommt es mit dem Arbeitsmedium in Kontakt. Das Steuerdruckmedium nimmt dabei kleine Tröpfchen des Arbeitsmediums auf. Bei Abschalten des hydrodynamischen Retarders wird der Steuerdruck zurückgenommen und das Steuerdruckmedium aus dem Arbeitsmediumbehälter herausgeleitet. Um einen Austrag von durch das Steuerdruckmedium mitgeführtem Arbeitsmedium und damit auf Dauer ein Absinken des Arbeitsmediumvolumens im Arbeitsmediumbehälter zu verhindern, muss das Arbeitsmedium aus dem Steuerdruckmedium abgeschieden werden. Herkömmlich werden dazu beispielsweise Ölabscheider mit porösen Strukturen herangezogen, durch welche das Steuerdruckmedium-Arbeitsmedium-Gemisch geleitet wird. Hierzu ist ein relativ hoher Druck des Steuerdruckmediums nötig, welcher einen zusätzlichen Energieaufwand zur Folge hat. Ein weiterer Nachteil derartiger Ölabscheider ist, dass diese aufgrund der porösen Struktur schmutzanfällig sind. Sich festsetzender Schmutz bewirkt ein Zusetzen der porösen Strukturen, wodurch die Abscheiderate sinkt und der Druckverlust steigt. Ein notwendiger regelmäßiger Austausch oder die Reinigung der Struktur erhöht den Wartungsaufwand eines hydrodynamischen Retarders mit einem solchen Steuerdruckbeaufschlagungssystem.

Aufgabe der vorliegenden Erfindung ist es daher, einen hydrodynamischen Retarder anzugeben, der die Nachteile des Standes der Technik vermeidet. Insbesondere soll ein hydrodynamischer Retarder mit einem Steuerdruckbeaufschlagungssystem angegeben werden, der unempfindlich gegen Verschmutzungen und wartungsarm ist und dessen Steuerdruckbeaufschlagungssystem geringe Druckverluste aufweist.

Ein erfindungsgemäßer hydrodynamischer Retarder umfasst einen beschaufelten Rotor und einen beschaufelten Stator, die miteinander einen mit Arbeitsmedium befüllbaren und davon entleerbaren Arbeitsraum ausbilden sowie einen Arbeitsmediumbehälter zur Aufnahme von momentan nicht im Arbeitsraum befindlichen Arbeitsmedium. Ferner ist ein Steuerdruckbeaufschlagungssystem zum Beaufschlagen des im Arbeitsmediumbehälter enthaltenen Arbeitsmediums mit einem Steuerdruckmedium vorgesehen, sodass mehr oder weniger Arbeitsmedium aus dem Arbeitsmediumbehälter in den Arbeitsraum verdrängt wird, um ein gewünschtes Bremsmoment einzustellen.

Erfindungsgemäß ist ein Fliehkraftabscheider zur Abscheidung von Arbeitsmedium aus dem Steuerdruckmedium, genauer gesagt zum Abscheiden von Arbeitsmedium aus einem Steuerdruckmedium-Arbeitsmedium-Gemisch, vorgesehen. Der Fliehkraftabscheider ist dabei strömungsleitend mit dem Steuerdruckmedium druckbeaufschlagt an einem Auslass des Arbeitsmediumbehälters für Steuerdruckmedium angeschlossen und durch den Druck des Steuerdruckmediums angetrieben.
Die Erfinder haben somit eine äußerst einfache wie wirkungsvolle Abscheidung des Arbeitsmediums aus dem Steuerdruckmedium gefunden. Der Fliehkraftabscheider wird dabei durch die "Abluft" beim Deaktivieren des hydrodynamischen Retarders und damit Zurücknehmen des Steuerdruckmediums beaufschlagt. Das Steuerdruckmedium, genauer gesagt das Steuerdruckmedium-Arbeitsmedium-Gemisch, welches nach Zurücknahme des Steuerdrucks aus dem Arbeitsmediumbehälter strömt, dient als Treibstrom für den Fliehkraftabscheider. Damit ist keine zusätzliche Hilfsenergie nötig, da die sich ohnehin über den Arbeitsmediumbehälter einstellende Druckdifferenz zum Betreiben des Fliehkraftabscheiders herangezogen wird. Letzterer ist aufgrund seiner Bau- und Wirkungsweise, der Trennung nach dem Zentrifugalprinzip, unempfindlich gegen Verschmutzungen und weitestgehend wartungsfrei.

Gemäß einer Ausführungsform weist der Fliehkraftabscheider zwei in Strömungsrichtung des Steuerdruckmediums hintereinander geschaltete Einlaufzylinder mit jeweils einem Steuerdruckmediumeintritt zum Zuführen von Steuerdruckmedium zu dem Einlaufzylinder sowie einem Steuerdruckmediumaustritt zum Abführen von Steuerdruckmedium hieraus auf, wobei der Steuerdruckmediumaustritt des ersten, zuerst vom Steuerdruckmedium durchströmten Einlaufzylinders mit dem Steuerdruckmediumeintritt des zweiten, dem ersten Einlaufzylinder nachgeschalteten zweiten Einlaufzylinder und der Steuerdruckmediumaustritt des zweiten Einlaufzylinders mit dem Auslass des Arbeitsmediumbehälters strömungsleitend verbunden ist. Hierdurch wird eine zweistufige Abtrennung des Arbeitsmediums aus dem Steuerdruckmedium-Arbeitsmedium-Gemisch erzielt. Natürlich wären auch mehr als zwei hintereinander geschaltete Einlaufzylinder denkbar.

Mit Vorteil ist der Fliehkraftabscheider oberhalb eines Flüssigkeitsspiegels des Arbeitsmediums des teils mit Steuerdruckmedium und teils mit Arbeitsmedium befüllten Arbeitsmediumbehälters angeordnet. Bevorzugt kann der Fliehkraftabscheider an der höchsten Stelle im Arbeitsmediumbehälter oder auch außerhalb des Arbeitsmediumbehälters an dessen Gehäuse angeordnet sein. Durch den direkten Kontakt des Steuerdruckmediums, wie Luft, mit dem im Betrieb des Retarders sich aufheizenden Arbeitsmedium, wie Öl, erwärmt sich die Luft, wodurch sie imstande ist mehr Arbeitsmedium in Tröpfchenform aufzunehmen. Durch eine Anordnung des Fliehkraftabscheiders soweit wie möglich weg von dem warmen Arbeitsmedium wird eine optimale Kühlung des Steuerdruckmedium-Arbeitsmedium-Gemischs erzielt, verbunden mit einer Abscheidung des Arbeitsmediums durch dessen Kondensation. Besonders eine vergleichsweise geringe Temperatur der Wandung der Einlaufzylinder, an welchen das Gemisch entlangströmt, führt zu einer hohen Kondensationsrate, die zusätzlich zu der Abscheidung durch Fliehkraft die Abscheiderate verbessert.

Die Erfindung soll nun anhand einer Ausführungsform und den beigefügten Figuren erläutert werden.

Es zeigen:
- Figur 1: eine schematische Darstellung eines in einem Kühlkreislauf angeordneten hydrodynamischen Retarders;
- Figur 2: eine bevorzugte Ausführungsform eines Arbeitsmediumbehälters des hydrodynamischen Retarders mit einem Fliehkraftabscheider.

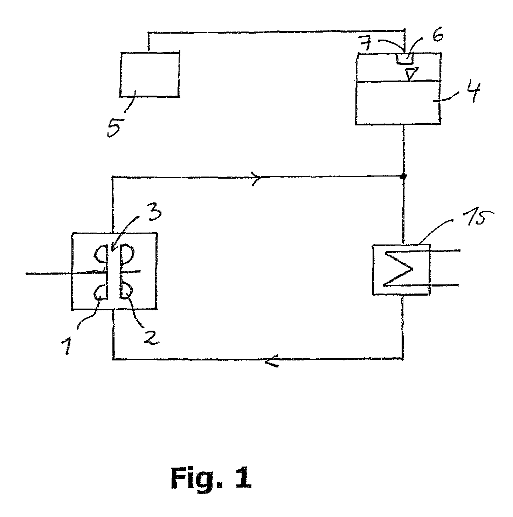

In Figur 1 ist eine schematische Darstellung eines in einem Kühlkreislauf angeordneten hydrodynamischen Retarders dargestellt. Letzterer umfasst ein beschaufeltes und umlaufendes Primärrad, hier als Rotor 1 bezeichnet, sowie ein stationäres, nicht-umlaufendes und ebenfalls beschaufeltes Sekundärrad, hier als Stator 2 bezeichnet. Rotor 1 und Stator 2 bilden zusammen einen vorliegend torusförmigen Arbeitsraum 3 aus. Weiterhin ist ein Arbeitsmediumbehälter 4 zur Bevorratung momentan nicht im Arbeitsraum 3 befindlichen Arbeitsmediums vorgesehen. Der Arbeitsmediumbehälter 4 ist hier in Strömungsrichtung des Arbeitsmediums gesehen über eine Einmündung an den Kühlkreislauf angeschlossen, wobei die Einmündung dem hydrodynamischen Retarder nachgeschaltet ist. In Strömungsrichtung hinter der Einmündung ist vorliegend ein Wärmetauscher 15 vorgesehen, welcher beispielsweise als Öl-Wasser-Wärmetauscher ausgeführt ist und zum Ableiten der im Betrieb des hydrodynamischen Retarders im Arbeitsmedium anfallenden Wärmemenge dient. Kühlkreislauf, Retarder und Wärmetauscher 15 könnten zu bevorzugt einer einzigen, kompakten Baueinheit zusammengefasst sein und bevorzugt in einem gemeinsamen Gehäuse untergebracht sein.
Der Arbeitsraum 3 ist über Arbeitsmedium, welches in dem Kühlkreislauf zirkuliert, befüllbar und davon entleerbar. Die Befüllung des Arbeitsraumes 3 erfolgt dabei durch Aufbringen eines unter Druck stehenden Steuerdruckmediums auf das im Arbeitsmediumbehälter 4 befindliche Arbeitsmedium. Die Entleerung erfolgt durch Zurücknahme dieser Druckbeaufschlagung. Arbeitsmediumbehälter 4 ist teils mit Arbeitsmedium, beispielsweise Öl, und teils mit Steuerdruckmedium, wie Luft, befüllt, sodass ein Flüssigkeitsspiegel des Arbeitsmediums die Steuerdruckmediumseite von der Arbeitsmediumseite trennt. Zur Druckbeaufschlagung des Flüssigkeitsspiegels ist hier eine (einzige) strömungsleitende Verbindung zwischen dem Arbeitsmediumbehälter 4 und einem Steuerdruckbeaufschlagungssystem 5 vorgesehen. Die strömungsleitende Verbindung bildet hier einen Ein- und zugleich Auslass 7 für das Steuerdruckmedium, welches in oder aus dem Arbeitsmediumbehälter 4 strömt.

Auch könnte eine weitere, parallel zu der strömungsleitenden Verbindung angeordnete Verbindungsleitung zwischen Steuerdruckbeaufschlagungssystem 5 und Arbeitsmediumbehälter 4 vorgesehen sein. In diesem Fall würde die Verbindungsleitung zum Druckbeaufschlagen, also zum Zuführen von Steuerdruckmedium aus dem Steuerdruckbeaufschlagungssystem 5 über einen Einlass zum Arbeitsmediumbehälter 4 und die strömungsleitende Verbindung zum Abführen des Steuerdruckmediums aus dem Arbeitsmediumbehälter 4 über den Auslass 7 dienen.

Wie in Figur 1 dargestellt, ist im Bereich des Auslasses 7 des Arbeitsmediumbehälters 4 ein Fliehkraftabscheider 6 angeordnet. Letzterer könnte auch außerhalb des Arbeitsmediumbehälters 4, beispielsweise an dessen Außenwandung, angeordnet sein. Der Fliehkraftabscheider 6 dient zur Abscheidung von Arbeitsmedium aus dem Steuerdruckmedium, genauer gesagt aus einem sich im Betrieb des hydrodynamischen Retarders im Arbeitsmediumbehälter 4 einstellenden Steuerdruckmedium-Arbeitsmedium-Gemisches. Dadurch, dass der Fliehkraftabscheider 6 im Bereich des Auslasses 7 angeordnet ist, kann er insbesondere ausschließlich beim Abführen von Steuerdruckmedium aus dem Arbeitsmediumbehälter 4, infolge der sich durch die Zurücknahme der Beaufschlagung einstellenden Druckdifferenz mit Steuerdruckmedium durchströmt und druckbeaufschlagt werden.

Dem Fliehkraftabscheider 6 könnte auch ein Bypass zur Umgehung desselben zugeordnet sein. In dem Bypass könnte dann in Strömungsrichtung des Steuerdruckmediums auf das Steuerdruckbeaufschlagungssystem 5 hin gesehen dem Fliehkraftabscheider 6 ein Rückschlagventil vorgeschaltet sein. Ein solches Rückschlagventil würde das aus dem Steuerdruckbeaufschlagungssystem 5 in Richtung auf den Arbeitsmediumbehälter 4 im Sinne einer Beaufschlagung des selbigen durch den Bypass strömende Steuerdruckmedium unter Umgehung des Fliehkraftabscheiders 6 zwar hindurchlassen. In einer entgegengesetzten Strömungsrichtung würde es den Strömungsquerschnitt im Bypass jedoch selbsttätig vollständig verschließen, sodass das Steuerdruckmedium zur Abtrennung von Arbeitsmedium durch den Fliehkraftabscheider 6 hindurchströmen müsste. Ein solcher Bypass kann bevorzugt dann eingesetzt werden, wenn lediglich eine einzige strömungsleitende Verbindung zwischen Steuerdruckbeaufschlagungssystem 5 und Arbeitsmediumbehälter 4 zum wahlweisen Druckbeaufschlagen und Entlüften desselben mit Steuerdruckmedium vorgesehen ist. Damit wird erreicht, dass nur aus dem Arbeitsmediumbehälter 4 in Richtung auf das Steuerdruckbeaufschlagungssystem 5 strömendes Steuerdruckmedium, nicht aber umgekehrt, den Fliehkraftabscheider 6 passiert.

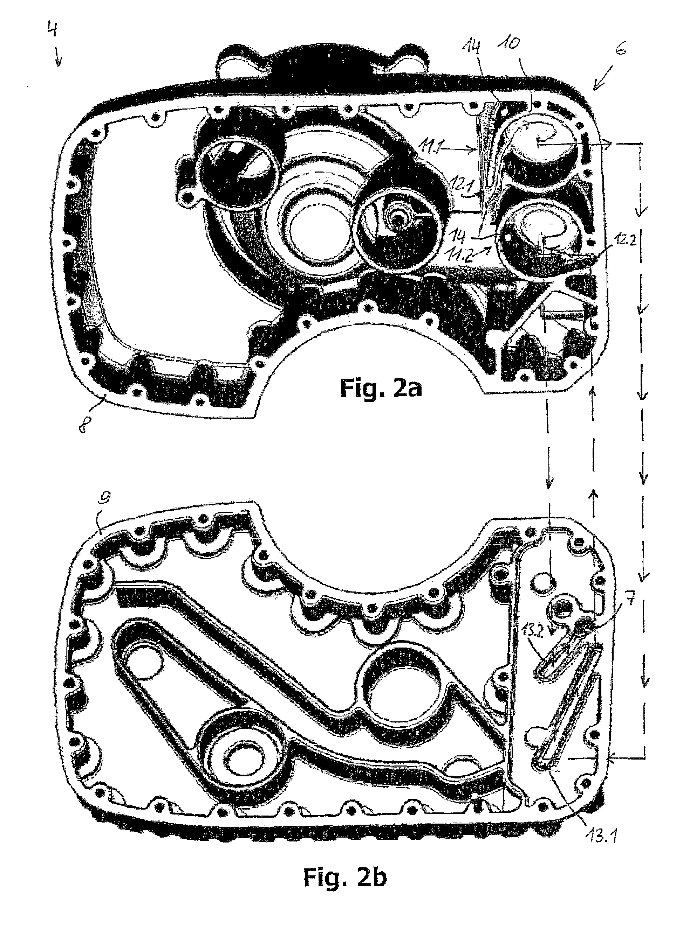

In Figur 2 ist eine bevorzugte Ausführungsform eines Arbeitsmediumbehälters 4 des hydrodynamischen Retarders in einer Explosionsdarstellung gezeigt. Im vorliegenden Fall ist der Arbeitsmediumbehälter 4 aus zwei Schalen 8, 9 zusammengefügt. Natürlich wäre auch eine davon abweichende Anzahl an Schalen denkbar, beispielsweise drei. Im vorliegenden Fall umschließt die erste Schale 8 den Fliehkraftabscheider 6 vollständig. Letzterer wird dabei von einer wenigstens abschnittsweise ringförmig verlaufenden Wandung 10, welche jeweils einen Einlaufzylinder 11.1, 11.2 begrenzt, gebildet. Die Zylinderachse des jeweiligen Einlaufzylinders 11.1, 11.2 steht dabei im Wesentlichen senkrecht auf einer der zweiten Schale 9 zugewandten Innenfläche der ersten Schale 8. Hier ist die Wandung 10 des jeweiligen Einlaufzylinders 11.1, 11.2 einteilig mit der ersten Schale 8 ausgebildet. Dies könnte jedoch anders sein. So könnte die Wandung 10 auch von der zweiten Schale 9 alleine oder auch von beiden Schalen 8, 9 gemeinsam ausgebildet werden. Alternativ könnte die Wandung 10 als Einzelteil in eine oder beide der Schalen 8, 9 eingesetzt sein.

Jeder Einlaufzylinder 11.1, 11.2 umfasst jeweils einen Steuerdruckmediumeintritt 12.1, 12.2, welcher mit der Steuerdruckmediumseite des Arbeitsmediumbehälters 4 verbunden ist und zum Zuführen von Steuerdruckmedium zu dem entsprechenden Einlaufzylinder 11.1, 11.2 dient. Ferner ist jedem Einlaufzylinder 11.1, 11.2 auch ein Steuerdruckmediumaustritt 13.1, 13.2 zum Abführen von Steuerdruckmedium hieraus zugeordnet. Beide Steuerdruckmediumeintritte 12.1, 12.2 sind im Bereich einer Trennebene der beiden Schalen 8, 9 angeordnet, werden von einem Ringspalt der Wandung 10 beziehungsweise zusammen mit der Wandung einer oder beider Schalen 8, 9 ausgebildet und verlaufen nahezu tangential an die Wandung des entsprechenden Einlaufzylinders 11.1, 11.2.

Wie man erkennt, sind die beiden Einlaufzylinder 11.1, 11.2 in Strömungsrichtung des sie durchströmenden Steuerdruckmediums hintereinander geschaltet. Bei Zurücknahme des Steuerdruckmediums strömt das den Arbeitsmediumbehälter 4, genauer gesagt, das die Steuerdruckmediumseite verlassende Steuerdruckmedium-Arbeitsmedium-Gemisch durch den Steuerdruckmediumeintritt 12.1 in den Einlaufzylinder 11.1, wo es radial nach außen beschleunigt wird und durch die Zentrifugalkraft das Arbeitsmedium abgetrennt wird. Letzteres kann über wenigstens eine Öffnung 14 in der Wandung 10 wieder zurück in den Arbeitsmediumbehälter 4 abfließen. Das vom Arbeitsmedium abgetrennte Steuerdruckmedium strömt dann weiter zu dem Steuerdruckmediumaustritt 13.1 des ersten Einlaufzylinders 11.1. Dieser befindet sich im Bereich der Zylinderachse des Einlaufzylinders 11.1, und zwar hier an dem der zweiten Schale 9 zugewandten axialen Ende des Einlaufzylinders 11.1. Von dort strömt es über eine strömungsleitende Verbindung in der zweiten Schale 9 in den Steuerdruckmediumeintritt 12.2 des zweiten Einlaufzylinders 11.2, wo es wiederum radial nach außen beschleunigt wird, sodass noch im Steuerdruckmedium enthaltenes Arbeitsmedium vollständig oder bis auf eine geringe Restmenge abgetrennt werden kann. Auch das im zweiten Einlaufzylinder 11.2, welcher als zweite Abscheidestufe fungiert, abgetrennte Arbeitsmedium kann hier über die exemplarisch dargestellte Öffnung 14 aus dem Einlaufzylinder 11.2 heraustreten, um in den Arbeitsmediumbehälter 4 zu strömen.

Das Steuerdruckmedium wird aufgrund des treibenden Druckunterschieds zwischen Steuerdruckbeaufschlagungssystem 5 und Arbeitsmediumbehälter 4 wiederum entlang der Zylinderachse an das der zweiten Schale 9 zugewandte axiale Ende des Einlaufzylinders 11.2 und dort über den Steuerdruckmediumaustritt 13.2 des zweiten Einlaufzylinders 11.2 zum Auslass 7 des Arbeitsmediumbehälters 4 "befördert", von wo es zurück in das Steuerdruckbeaufschlagungssystem 5 (Figur 1) strömt.

### Bezugszeichenliste

- 1: Rotor
- 2: Stator
- 3: Arbeitsraum
- 4: Arbeitsmediumbehälter
- 5: Steuerdruckbeaufschlagungssystem
- 6: Fliehkraftabscheider
- 7: Auslass
- 8,9: Schale
- 10: Wandung
- 11.1, 11.2: Einlaufzylinder
- 12.1, 12.2: Steuerdruckeintritt
- 13.1, 13.2: Steuerdruckaustritt
- 14: Öffnung
- 15: Wärmetauscher

## Patentansprüche

1. Hydrodynamischer Retarder,
mit einem beschaufelten Rotor (1) und einem beschaufelten Stator (2), die miteinander einen mit Arbeitsmedium befüllbaren und davon entleerbaren Arbeitsraum (3) ausbilden;
1.1 mit einem Arbeitsmediumbehälter (4) zur Aufnahme von momentan nicht im Arbeitsraum (3) befindlichen Arbeitsmedium;
1.2 mit einem Steuerdruckbeaufschlagungssystem (5) zum Beaufschlagen des im Arbeitsmediumbehälter (4) enthaltenen Arbeitsmediums mit einem Steuerdruckmedium, sodass mehr oder weniger Arbeitsmedium aus dem Arbeitsmediumbehälter (4) in den Arbeitsraum (3) verdrängt wird, um ein gewünschtes Bremsmoment einzustellen;
**gekennzeichnet durch** die folgenden Merkmale:
1.3 es ist ein Fliehkraftabscheider (6) zur Abscheidung von Arbeitsmedium aus dem Steuerdruckmedium vorgesehen;
1.4 der Fliehkraftabscheider (6) ist strömungsleitend mit dem Steuerdruckmedium druckbeaufschlagt an einem Auslass (7) des Arbeitsmediumbehälters (4) für Steuerdruckmedium angeschlossen und **durch** den Druck des Steuerdruckmediums angetrieben.

2. Hydrodynamischer Retarder gemäß Anspruch 1, **dadurch gekennzeichnet, dass** der Arbeitsmediumbehälter (4) aus wenigstens zwei Schalen (8, 9) zusammengefügt ist, wobei die erste und/oder die zweite Schale (8, 9) den Fliehkraftabscheider (6) umschließt.

3. Hydrodynamischer Retarder gemäß Anspruch 1 oder 2, **dadurch gekennzeichnet, dass** der Fliehkraftabscheider (6) wenigstens einen von einer wenigstens abschnittsweise ringförmig verlaufenden Wandung (10) begrenzten Einlaufzylinder (11.1, 11.2) aufweist, dessen Zylinderachse im Wesentlichen senkrecht auf einer der zweiten Schale (9) zugewandten Innenfläche der ersten Schale (8) steht.

4. Hydrodynamischer Retarder gemäß Anspruch 3, **dadurch gekennzeichnet, dass** die Wandung (10) des Einlaufzylinders (11.1, 11.2) einteilig mit der ersten und/oder zweiten Schale (8, 9) ist.

5. Hydrodynamischer Retarder gemäß einem der Ansprüche 3 oder 4, **dadurch gekennzeichnet, dass** der Fliehkraftabscheider (6) zwei in Strömungsrichtung des Steuerdruckmediums hintereinandergeschaltete Einlaufzylinder (11.1, 11.2) mit jeweils einem Steuerdruckmediumeintritt (12.1, 12.2) zum Zuführen von Steuerdruckmedium zu dem Einlaufzylinder (11.1, 11.2) und einem Steuerdruckmediumaustritt (13.1, 13.2) zum Abführen von Steuerdruckmedium hieraus aufweist; wobei der Steuerdruckmediumaustritt (13.1) des ersten Einlaufzylinders (11.1) mit dem Steuerdruckmediumeintritt (12.2) des zweiten Einlaufzylinders (11.2) und der Steuerdruckmediumaustritt (13.2) des zweiten Einlaufzylinders (11.2) mit dem Auslass (7) des Arbeitsmediumbehälters (4) strömungsleitend verbunden ist.

6. Hydrodynamischer Retarder gemäß Anspruch 5, **dadurch gekennzeichnet, dass** die strömungsleitende Verbindung jeweils von der ersten und/oder zweiten Schale (8, 9) ausgebildet ist.

7. Hydrodynamischer Retarder gemäß einem der Ansprüche 3 bis 6, **dadurch gekennzeichnet, dass** die Wandung (10) wenigstens eine Öffnung (14) aufweist, um Arbeitsmedium aus dem Einlaufzylinder (11.1, 11.2) in den Arbeitsmediumbehälter (4) abzuleiten.

8. Hydrodynamischer Retarder gemäß einem der Ansprüche 1 bis 7, **dadurch gekennzeichnet, dass** der Fliehkraftabscheider (6) oberhalb eines Flüssigkeitsspiegels des Arbeitsmediums des teils mit Steuerdruckmedium und teils mit Arbeitsmedium befüllten Arbeitsmediumbehälters (4) angeordnet ist.

## Claims

1. Hydrodynamic retarder,
having a bladed rotor (1) and a bladed stator (2) which together form a working chamber (3) which can be filled with and emptied of working medium;
1.1 having a working medium vessel (4) for storing working medium that is presently not situated in the working chamber (3);
1.2 having a control pressure action system (5) for the action of a control pressure medium on the working medium contained in the working medium vessel (4), such that a greater or lesser amount of working medium is displaced from the working medium vessel (4) into the working chamber (3) in order to set a desired braking torque; **characterized by** the following features:
1.3 a centrifugal separator (6) is provided for separating working medium from the control pressure medium;
1.4 the centrifugal separator (6) is connected in flow-conducting fashion, so as to be acted on by the pressure of the control pressure medium, to an outlet (7) of the working medium vessel (4) for control pressure medium, and is driven by the pressure of the control pressure medium.

2. Hydrodynamic retarder according to Claim 1, **characterized in that** the working medium vessel (4) is assembled from at least two shells (8, 9), wherein the first and/or the second shell (8, 9) encloses the centrifugal separator (6).

3. Hydrodynamic retarder according to Claim 1 or 2, **characterized in that** the centrifugal separator (6) has at least one inflow cylinder (11.1, 11.2) delimited by a wall (10) which runs in ring-shaped fashion at least in sections, the cylinder axis of which inflow cylinder is substantially perpendicular to an inner surface, facing toward the second shell (9), of the first shell (8).

4. Hydrodynamic retarder according to Claim 3, **characterized in that** the wall (10) of the inflow cylinder (11.1, 11.2) is integral with the first and/or second shell (8, 9).

5. Hydrodynamic retarder according to either of Claims 3 and 4, **characterized in that** the centrifugal separator (6) has two inflow cylinders (11.1, 11.2) which are connected in series in the flow direction of the control pressure medium and which have in each case one control pressure medium inlet (12.1, 12.2) for the supply of control pressure medium to the inflow cylinder (11.1, 11.2) and one control pressure medium outlet (13.1, 13.2) for the discharge of control pressure medium out of said inflow cylinder, wherein the control pressure medium outlet (13.1) of the first inflow cylinder (11.1) is connected in flow-conducting fashion to the control pressure medium inlet (12.2) of the second inflow cylinder (11.2) and the control pressure medium outlet (13.2) of the second inflow cylinder (11.2) is connected in flow-conducting fashion to the outlet (7) of the working medium vessel (4).

6. Hydrodynamic retarder according to Claim 5, **characterized in that** the flow-conducting connection is formed in each case by the first and/or second shell (8, 9).

7. Hydrodynamic retarder according to one of Claims 3 to 6, **characterized in that** the wall (10) has at least one opening (14) for discharging working medium out of the inflow cylinder (11.1, 11.2) into the working medium vessel (4).

8. Hydrodynamic retarder according to one of Claims 1 to 7, **characterized in that** the centrifugal separator (6) is arranged above a liquid level of the working medium of the working medium vessel (4), which is filled partially with control pressure medium and partially with working medium.

## Revendications

1. Retardateur hydrodynamique,
avec un rotor (1) garni d'aubes et un stator (2) garni d'aubes, qui forment l'un avec l'autre une chambre de travail (3) pouvant être remplie avec un fluide de travail et vidée de celui-ci;
1.1 avec un réservoir de fluide de travail (4) destiné à contenir le fluide de travail ne se trouvant momentanément pas dans la chambre de travail (3);
1.2 avec un système d'application de pression de commande (5) pour soumettre le fluide de travail contenu dans le réservoir de fluide de travail (4) à un fluide à la pression de commande, de telle manière que plus ou moins de fluide de travail soit refoulé du réservoir de fluide de travail (4) dans la chambre de travail (3), afin de régler un couple de freinage désiré;
**caractérisé par** les caractéristiques suivantes:
1.3 il est prévu un séparateur centrifuge (6) pour la séparation de fluide de travail hors du fluide à la pression de commande;
1.4 le séparateur centrifuge (6) soumis à la pression avec le fluide à la pression de commande en liaison d'écoulement est raccordé à une sortie (7) du réservoir de fluide de travail (4) pour du fluide à la pression de commande et est entraîné par la pression du fluide à la pression de commande.

2. Retardateur hydrodynamique selon la revendication 1, **caractérisé en ce que** le réservoir de fluide de travail (4) est composé d'au moins deux coques (8, 9), dans lequel la première et/ou la deuxième coque (8, 9) entoure le séparateur centrifuge (6).

3. Retardateur hydrodynamique selon la revendication 1 ou 2, **caractérisé en ce que** le séparateur centrifuge (6) présente au moins un cylindre d'entrée (11.1, 11.2) limité par une paroi au moins localement annulaire (10), dont l'axe du cylindre est essentiellement perpendiculaire à une face intérieure de la première coque (8) tournée vers la deuxième coque (9).

4. Retardateur hydrodynamique selon la revendication 3, **caractérisé en ce que** la paroi (10) du cylindre d'entrée (11.1, 11.2) est réalisée en une seule pièce avec la première et/ou la deuxième coque (8, 9).

5. Retardateur hydrodynamique selon l'une des revendications 3 ou 4, **caractérisé en ce que** le séparateur centrifuge (6) présente deux cylindres d'entrée (11.1, 11.2) montés l'un derrière l'autre dans la direction d'écoulement du fluide à la pression de commande, avec chaque fois une entrée de fluide à la pression de commande (12.1, 12.2) pour l'admission de fluide à la pression de commande dans le cylindre d'entrée (11.1, 11.2) et une sortie de fluide à la pression de commande (13.1, 13.2) pour l'évacuation de fluide à la pression de commande hors de celui-ci; dans lequel la sortie de fluide à la pression de commande (13.1) du premier cylindre d'entrée (11.1) est en liaison d'écoulement avec l'entrée de fluide à la pression de commande (12.2) du deuxième cylindre d'entrée (11.2) et la sortie de fluide à la pression de commande (13.2) du deuxième cylindre d'entrée (11.2) est en liaison d'écoulement avec la sortie (7) du réservoir de fluide de travail (4).

6. Retardateur hydrodynamique selon la revendication 5, **caractérisé en ce que** la liaison d'écoulement est formée respectivement par la première et/ou la deuxième coque (8, 9).

7. Retardateur hydrodynamique selon l'une quelconque des revendications 3 à 6, **caractérisé en ce que** la paroi (10) présente au moins une ouverture (14), destinée à évacuer du fluide de travail hors du cylindre d'entrée (11.1, 11.2) dans le réservoir de fluide de travail (4).

8. Retardateur hydrodynamique selon l'une quelconque des revendications 1 à 7, **caractérisé en ce que** le séparateur centrifuge (6) est disposé au-dessus d'un niveau de liquide du fluide de travail du réservoir de fluide de travail (4) rempli partiellement avec du fluide à la pression de commande et partiellement avec du fluide de travail.
